# FASCICULE DE BREVET EUROPEEN

(11) **EP 1 652 759 B1**
(45) Date de publication et mention de la délivrance du brevet: **16.07.2008**
(21) Numéro de dépôt: 05292296.0
(22) Date de dépôt: 28.10.2005
(51) Int. Cl.: B62D 29/00, B62D 25/02

(54) **Organe allongé en matière plastique appartenant à une structure de toit**
Längliches Bauelement aus Kunststoff in einer Dachstruktur.
Plastic elongated element as part of a roof structure.

(30) Priorité: 28.10.2004 FR 0411529
(43) Date de publication de la demande: 03.05.2006
(73) Titulaire: COMPAGNIE PLASTIC OMNIUM, 69007 Lyon (FR)
(72) Inventeur: Bonneau, Eric, 38460 Saint Romain de Jalionas (FR)
(74) Mandataire: Remy, Vincent Noel Paul

(56) Documents cités:
- EP-A- 1 155 941
- DE-A1- 3 204 526
- DE-A1- 19 508 970

## Description

La présente invention concerne un organe allongé en matière plastique appartenant à une structure de toit, un organe de structure de toit, une arche de toit, un cadre de toit et un module de toit de véhicule automobile.

On connaît déjà, dans l'état de la technique, notamment d'après DE 32 04 526, un organe allongé en matière plastique appartenant à une structure de toit de véhicule automobile, destiné à coopérer avec un corps creux allongé en tôle en étant lié à ce dernier de manière à conférer sa rigidité à la structure de toit.

Cet organe en matière plastique est surmoulé sur le corps creux en tôle de manière à former la structure de toit rigide.

Une structure de toit ainsi obtenue est avantageuse puisque son poids est relativement réduit par rapport au poids des structures de toit classiques conçues uniquement en tôle métallique.

Cependant, la conception d'une telle structure de toit est très différente de la conception d'une structure de toit classique en tôle, et l'adopter obligerait à apporter de lourdes modifications dans les chaînes de montages classiques de véhicules automobiles, ce qui entraînerait des frais conséquents.

On connaît également, dans l'état de la technique, un organe de structure de toit de véhicule automobile comportant un corps creux allongé en tôle métallique participant à la rigidité de l'organe de structure.

En général, cet organe de structure classique en tôle forme une arche de toit du véhicule automobile.

On notera qu'un véhicule automobile monté dans une chaîne de montage classique comporte couramment un tel organe de structure.

Habituellement, le toit du véhicule automobile s'étend entre deux arches de toit, orientées chacune selon la direction longitudinale du véhicule automobile. Chaque arche de toit participe à la rigidité de la caisse automobile. En effet, le corps creux en tôle forme un caisson de rigidification de l'arche et des éléments reliés à l'arche.

En général, divers équipements sont agencés dans la partie supérieure du véhicule automobile, notamment pour manoeuvrer un ouvrant agencé dans le toit du véhicule. Les équipements comprennent dans ce cas un moteur destiné à actionner l'ouvrant.

Or, une arche de toit ne comporte généralement qu'une partie structurelle qui n'est pas apte à recevoir des équipements.

Il est donc nécessaire d'agencer des moyens pour porter les équipements dans un espace délimité par les deux arches de toit. Ces moyens comportent par exemple un cadre en matière plastique.

Ces moyens pour porter les équipements étant généralement encombrants, l'ouverture disponible pour l'ouvrant du toit du véhicule automobile est réduite.

L'invention a notamment pour but de remédier à cet inconvénient en fournissant un organe de structure de toit, formant par exemple une arche de toit de véhicule automobile, permettant notamment d'agencer des équipements dans la partie supérieure du véhicule automobile sans utiliser de moyens trop encombrants.

L'invention a également pour but de réduire le poids de la structure de toit, le tout sans nécessiter d'apporter de lourdes modifications dans les chaînes de montages classiques de véhicules automobiles.

A cet effet, l'invention a pour objet un organe de structure de toit de véhicule automobile, du type comportant un corps creux allongé en tôle métallique participant à la rigidité de l'organe de structure, et un organe allongé en matière plastique lié au corps creux de manière à conférer sa rigidité à la structure de toit caractérisé en ce que l'organe allongé est rapporté sur le corps creux en tôle et fixé à un siège de ce corps creux du coté de l'intérieur ou de l'extérieur du véhicule automobile par rapport à ce corps creux en tôle.

La rigidité de la structure de toit est assurée grâce au corps creux (formant caisson) et à l'organe allongé en matière plastique lié au corps creux conformément à l'invention. De ce fait, la dimension transversale du corps creux peut être réduite de manière à libérer de l'espace pour l'organe allongé en matière plastique, ceci sans réduire la rigidité de l'organe de structure puisque l'organe allongé en matière plastique participe à cette rigidité.

Ainsi, l'organe de structure de toit selon l'invention présente une rigidité très satisfaisante tout en réduisant son poids et en autorisant l'agencement d'équipements divers dans la partie en matière plastique (organe allongé) de cet organe de structure.

En effet, il est facile de fabriquer un organe allongé en matière plastique de forme relativement complexe adaptée à l'intégration de fonctions supplémentaires de l'organe de structure telles que la fonction de support d'équipements divers, l'absorption d'énergie en cas de déformation accidentelle de la caisse du véhicule, le passage de câbles électriques, le passage d'air conditionné, etc.

Ces fonctions supplémentaires étant directement assurées par l'organe de structure (généralement une arche de toit), il n'est plus nécessaire d'ajouter des moyens supplémentaires qui réduiraient l'espace entre deux organes de structures (généralement deux arches de toit) montés sur le véhicule automobile.

On notera qu'un tel organe allongé en matière plastique peut être assemblé sur le corps en tôle dans une chaîne de montage classique, comportant uniquement une opération supplémentaire d'assemblage de cet organe allongé en matière plastique et du corps en tôle.

Un organe allongé en matière plastique selon l'invention peut en outre comporter l'une ou plusieurs des caractéristiques suivantes :
- l'organe allongé en matière plastique a une forme générale creuse ;
- l'organe allongé en matière plastique a une section en U ;
- l'organe allongé en matière plastique comporte des moyens d'absorption d'énergie, destinés à absorber l'énergie en cas de déformation de la structure de toit tendant à rapprocher le toit d'un habitacle du véhicule automobile ;
- l'organe allongé en matière plastique forme un support pour divers équipements ;
- l'organe allongé en matière plastique est conformé pour être agencé du coté de l'intérieur du véhicule automobile par rapport au corps creux en tôle ;
- l'organe allongé en matière plastique est muni d'un organe de masquage destiné à assurer une fonction esthétique à l'intérieur du véhicule automobile ;
- l'organe allongé en matière plastique est conformé pour être agencé du coté de l'extérieur du véhicule automobile par rapport au corps creux en tôle ;
- l'organe allongé en matière plastique est formé par une partie d'un cadre en matière plastique.

L'invention a également pour objet un organe de structure de toit de véhicule automobile du type comportant un corps creux allongé en tôle métallique participant à la rigidité de l'organe de structure, **caractérisé en ce qu**'il comporte un organe allongé en matière plastique tel que défini précédemment, le corps creux en tôle et l'organe allongé étant liés ensemble de manière à former une structure conférant à l'organe de structure sa rigidité.

Un organe de structure selon l'invention peut en outre comporter l'une ou plusieurs des caractéristiques suivantes :
- le corps creux en tôle est conformé en un siège sur lequel est fixé l'organe allongé en matière plastique;
- l'organe de structure comporte un organe allongé en matière plastique, dans lequel le corps creux en tôle est conformé pour assurer une fonction esthétique à l'extérieur du véhicule automobile ;
- l'organe de structure est destiné à porter un panneau de toit de véhicule automobile destiné à être fixé sur le corps creux en tôle ;
- l'organe de structure est destiné à porter un panneau de toit de véhicule automobile destiné à être fixé sur l'organe allongé en matière plastique ;
- l'organe de structure comprend un panneau de toit de véhicule automobile moulé avec l'organe allongé en matière plastique ;
- le corps creux en tôle et l'organe allongé en matière plastique sont liés ensemble par collage.

L'invention concerne également une arche de toit de véhicule automobile, **caractérisée en ce qu**'elle comprend un organe de structure de toit tel que défini précédemment s'étendant sensiblement longitudinalement par rapport au véhicule et conférant à l'arche de toit sa rigidité.

L'invention concerne aussi un cadre de toit de véhicule automobile, du type comportant deux cotés longitudinaux reliés entre eux par deux cotés transversaux, **caractérisé en ce qu**'au moins un des cotés est formé par un organe de structure de toit tel que défini précédemment.

De manière optionnelle, chaque coté du cadre de toit est formé par un organe de structure de toit.

De préférence, les organes allongés en matière plastique des quatre cotés sont reliés entre eux de manière à former un cadre en matière plastique.

L'invention concerne enfin un module de toit de véhicule automobile du type comprenant au moins un élément de module, **caractérisé en ce qu**'il comporte un organe de structure de toit tel que défini précédemment, l'organe allongé en matière plastique portant l'élément de module.

De préférence, l'élément de module est un panneau de toit.

Ainsi, le module de toit peut être monté sur le véhicule automobile en une seule opération de montage au cours de laquelle on équipe en une seule fois le véhicule d'un panneau de toit, de divers équipements et de diverses fonctions de l'organe allongé en matière plastique.

De plus, les dimensions du corps creux en tôle peuvent être réduites de manière à libérer de l'espace pour le module de toit, ceci sans réduire la rigidité de l'organe de structure de toit puisque le module de toit participe à cette rigidité.

L'invention sera mieux comprise à la lecture de la description qui va suivre, donnée uniquement à titre d'exemple et faite en se référant aux dessins annexés dans lesquels :
- la figure 1 est une vue en section transversale d'une arche de toit de véhicule automobile selon un premier mode de réalisation de l'invention ;
- les figures 2 à 6 sont des vues analogues à la figure 1 montrant une arche de toit selon des deuxième à sixième modes de réalisation de l'invention.

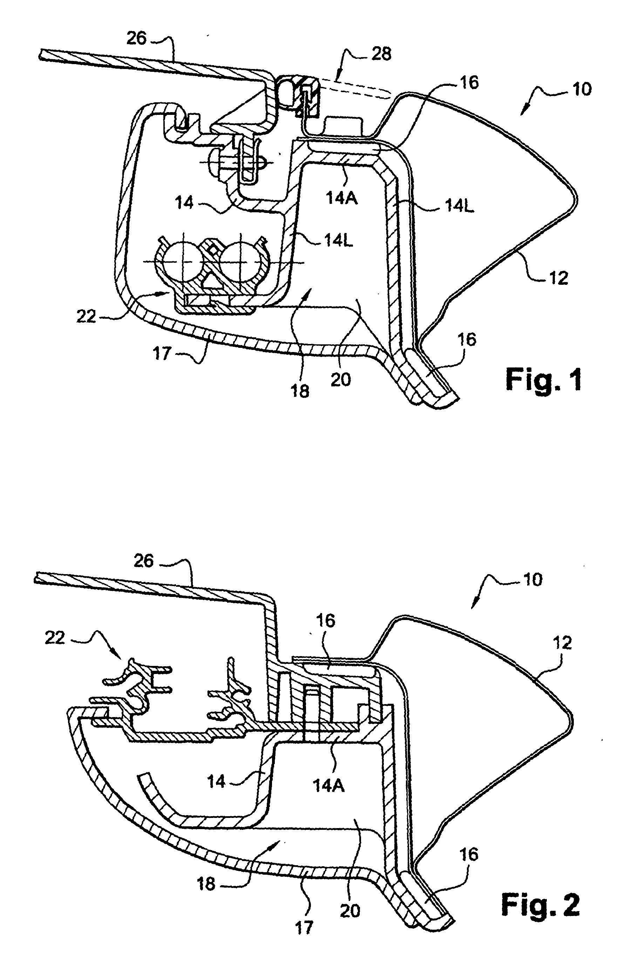

On a représenté, sur la figure 1, un organe de structure de toit, désigné par la référence générale 10, selon un premier mode de réalisation de l'invention.

Selon ce mode de réalisation, l'organe de structure 10 forme une arche de toit de véhicule automobile.

L'arche de toit 10 comporte un corps creux 12 en tôle métallique et un organe allongé 14 en matière plastique. Ce corps creux en tôle 12 et cet organe allongé 14 en matière plastique sont liés ensemble, de manière à former une structure conférant à l'arche 10 sa rigidité. De préférence, le corps creux 12 en tôle et l'organe allongé 14 en matière plastique sont liés ensemble par collage, les points de colle étant désignés par la référence 16. En variante, le corps creux 12 en tôle et l'organe allongé 14 en matière plastique peuvent être liés ensemble par des lignes de colle.

De préférence, le corps creux 12 en tôle est conformé en un siège sur lequel est fixé l'organe allongé 14 en matière plastique.

L'organe allongé 14 en matière plastique est agencé du côté de l'intérieur du véhicule automobile par rapport au corps creux 12. Ainsi, lors du montage de l'arche de toit 10, l'organe allongé en matière plastique 14 est apporté et collé par le dessous sur le corps creux en tôle 12.

Afin que l'organe allongé 14 en matière plastique ne soit pas visible de l'intérieur de l'habitacle du véhicule automobile, un organe de masquage 17 est rapporté sur l'organe allongé 14. Cet organe de masquage 17 est destiné à assurer une fonction esthétique à l'intérieur du véhicule automobile. On notera qu'en variante, l'organe allongé 14 en matière plastique peut être moulé de manière à assurer lui-même cette fonction esthétique.

Par ailleurs, le corps creux 12 étant visible de l'extérieur du véhicule automobile, il est conformé pour participer à l'esthétique externe du véhicule automobile. Le corps creux 12 est généralement peint en même temps que le reste de la caisse du véhicule.

Selon le premier mode de réalisation de l'invention, l'organe allongé 14 en matière plastique est creux et a une section en U délimitée par deux ailes 14L sensiblement verticales reliées entre elles par une âme 14A.

L'organe allongé 14 en matière plastique comporte des moyens 18 d'absorption d'énergie en cas de déformation de l'arche 10 tendant à rapprocher le toit du véhicule automobile vers un habitacle du véhicule automobile. Ainsi, l'arche de toit 10 intègre une fonction de protection des passagers du véhicule automobile lorsque ce véhicule automobile se retourne.

Les moyens d'absorption d'énergie 18 comportent par exemple des nervures 20, s'étendant dans l'organe allongé 14 en matière plastique entre les ailes 14L.

Par ailleurs, l'organe allongé 14 en matière plastique est conformé de façon à délimiter des supports ou des logements pour divers équipements 22. Dans ce mode de réalisation, les équipements 22 sont des moyens d'accrochage de câbles électriques.

On notera que l'organe allongé 14 en matière plastique peut porter divers autres équipements, par exemple un moteur pour un ouvrant de toit de véhicule automobile, des conduites d'air conditionné, etc.

L'arche de toit 10 est en outre destinée à recevoir un panneau de toit 26, constituant un élément de module, généralement fixé sur l'organe allongé 14 en matière plastique, sur un prolongement latéral d'une aile 14L de l'organe14, par exemple par vissage.

Pour des raisons esthétiques, on peut en outre prévoir un joint 28 agencé entre le panneau de toit 26 et le corps creux 12.

Généralement, l'organe de structure de toit 10 formant arche de toit est un coté d'un cadre de toit de véhicule automobile.

Ce cadre de toit (non représenté) comporte de préférence deux cotés longitudinaux formés par des arches de toit similaires à l'arche de toit 10, reliés entre eux par deux cotés transversaux également formés par des organes de structures de toit selon l'invention.

De préférence, les organes allongés 14 en matière plastique des quatre cotés du cadre de toit sont reliés entre eux de manière à former un cadre en matière plastique. Ce cadre en matière plastique est rapporté et collé par le dessous sur les corps creux 12 des quatre cotés du cadre de toit.

Le cadre en matière plastique comporte les équipements 22 et assure notamment les mêmes fonctions que l'organe allongé 14, par exemple les fonctions esthétique et amortissement décrites précédemment.

En outre, un élément de module, tel que le panneau de toit 26, peut être fixé sur le cadre en matière plastique avant montage sur le véhicule automobile. On forme ainsi un module de toit pouvant être monté sur le véhicule automobile en une unique opération de montage, en apportant à la fois le panneau de toit 26, les équipements 22, la fonction de rigidification de la caisse automobile, ainsi que les autres fonctions assurées par le cadre en matière plastique.

Sur les figures 2 à 6, les éléments analogues à ceux de la figure 1 sont désignés par des références identiques.

Selon le deuxième mode de réalisation, décrit en référence à la figure 2, le corps creux 12 est collé à la fois sur l'organe allongé 14 et sur le panneau de toit 26. Le panneau de toit 26 est fixé par vissage sur l'âme 14A de l'organe allongé 14 en matière plastique. En variante, le panneau de toit 26 peut être fixé par collage sur l'âme 14A.

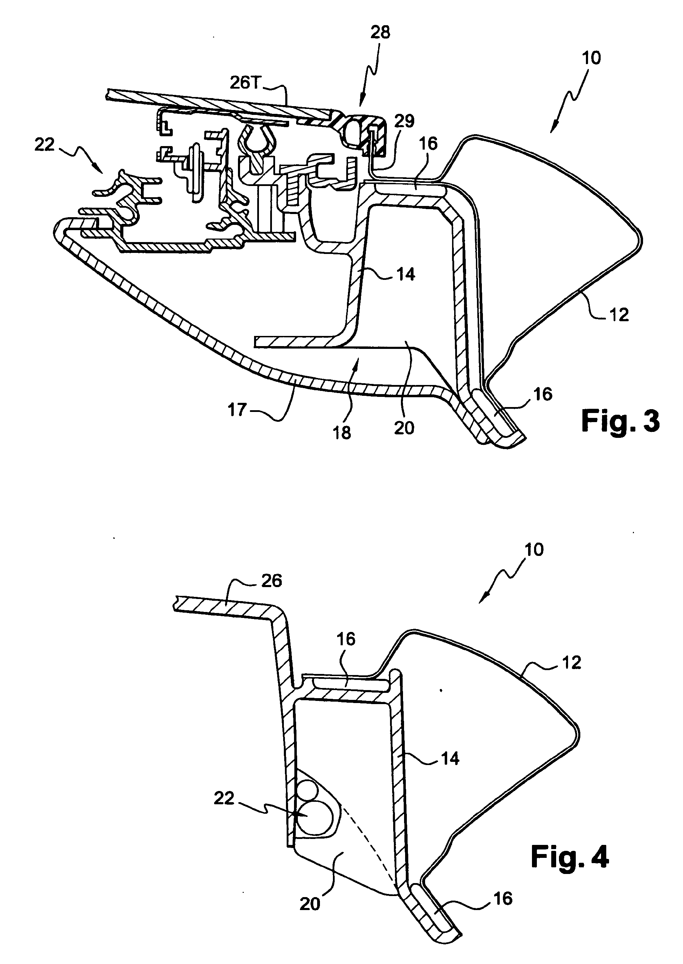

Selon le troisième mode de réalisation, décrit en référence à la figure 3, le véhicule automobile comporte un toit ouvrant porté en partie par l'arche de toit 10. Le toit comporte alors un ouvrant 26T, généralement transparent, susceptible de coulisser entre des positions d'ouverture et de fermeture du toit.

Les équipements 22 comportent généralement des moyens de guidage en coulissement de l'ouvrant 26T, et un moteur destiné à actionner cet ouvrant 26T.

Par ailleurs, un joint 28 est agencé sur le corps creux 12 en tôle, par pincement d'une lèvre 29 solidaire de ce corps creux 12. L'ouvrant 26T, en position de fermeture du toit, est susceptible de coopérer avec ce joint 28.

Généralement, le joint 28 est un joint d'étanchéité, et il peut être conformer pour assurer une fonction esthétique à l'extérieur du véhicule.

Selon le quatrième mode de réalisation, décrit en référence à la figure 4, le panneau de toit 26 est en matière plastique. Le panneau 26 est moulé avec l'organe allongé 14 en matière plastique, ou surmoulé sur cet organe allongé 14 en matière plastique. En variante non représentée, le panneau 26 peut être une tôle prélaquée, solidarisée à une pièce de matière plastique surmoulée prolongeant l'organe allongé 14.

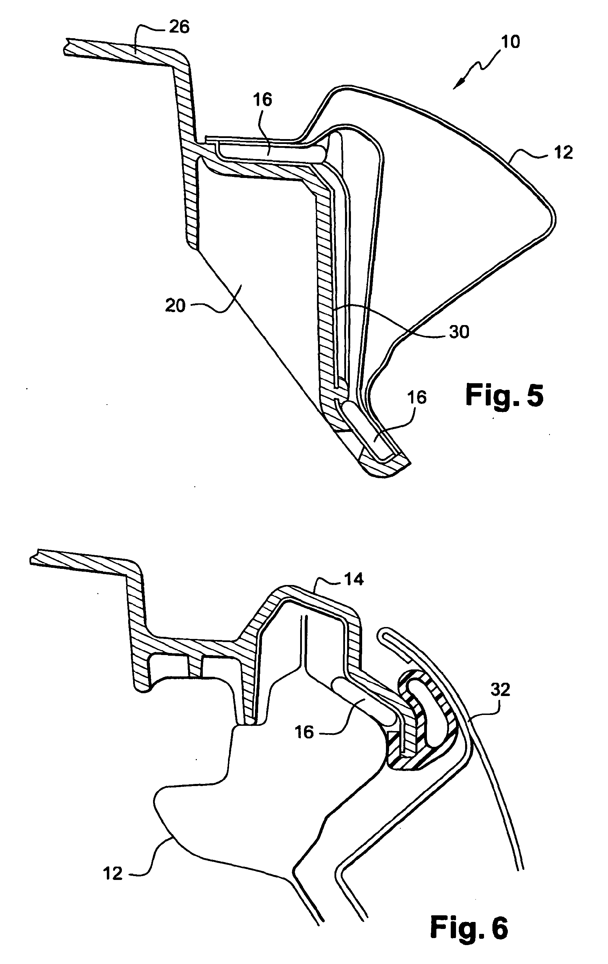

Le cinquième mode de réalisation, décrit en référence à la figure 5, diffère du mode de réalisation de la figure 4 en ce que l'organe allongé 14 en matière plastique est surmoulé sur une tôle 30. Cette tôle 30 est collée sur le corps creux 12. En variante, la tôle 30 peut être soudé sur le corps creux 12.

Le sixième mode de réalisation, décrit en référence à la figure 6, diffère des modes de réalisation précédents en ce que l'organe allongé 14 en matière plastique est agencé du côté extérieur du véhicule automobile par rapport au corps creux 12 en tôle.

L'organe allongé 14 est dans ce cas conformé pour assurer une fonction esthétique à l'extérieur du véhicule automobile, notamment par rapport à des pièces de carrosserie 32 adjacentes à l'organe allongé 14, telles que par exemple des portières de véhicule automobile.

En variante, un élément en tôle enduit peut être agencé sur l'organe allongé 14 afin de réaliser la fonction esthétique à l'extérieur du véhicule. Cet élément en tôle peut être peint en même temps que le reste de la caisse du véhicule.

On notera que l'invention n'est pas limitée aux modes de réalisation précédemment décrits. En effet, il est possible de combiner diverses caractéristiques des différents modes de réalisation décrits sans sortir du cadre de l'invention, déterminé par la teneur des revendications suivantes.

## Revendications

1. Organe de structure (10) de toit de véhicule automobile, du type comportant un corps creux allongé (12) en tôle métallique participant à la rigidité de l'organe de structure (10), et un organe allongé (14) en matière plastique lié au corps creux (12) de manière à conférer sa rigidité à la structure de toit (10) **caractérisé en ce que** l'organe allongé est rapporté sur le corps creux en tôle et fixé à un siège de ce corps creux (12) du coté de l'intérieur ou de l'extérieur du véhicule automobile par rapport à ce corps creux (12) en tôle.

2. Organe de structure (10) selon la revendication 1, dans lequel l'organe allongé (14) en matière plastique a une forme générale creuse.

3. Organe de structure (10) selon la revendication 2, dans lequel l'organe allongé (14) en matière plastique a une section en U.

4. Organe de structure (10) selon l'une quelconque des revendications précédentes, dans lequel l'organe allongé (14) comporte des moyens (18) d'absorption d'énergie, destinés à absorber l'énergie en cas de déformation de la structure de toit (10) tendant à rapprocher le toit d'un habitacle du véhicule automobile.

5. Organe de structure (10) selon l'une quelconque des revendications précédentes, dans lequel l'organe allongé (14) forme un support pour divers équipements (22).

6. Organe de structure (10) selon l'une quelconque des revendications 1 à 5, dans lequel l'organe allongé (14) est agencé du coté de l'intérieur du véhicule automobile par rapport au corps creux (12) en tôle.

7. Organe de structure (10) selon la revendication 6, dans lequel l'organe allongé (14) est muni d'un organe de masquage (17) destiné à assurer une fonction esthétique à l'intérieur du véhicule automobile.

8. Organe de structure (10) selon l'une quelconque des revendications 1 à 5, dans lequel l'organe allongé (14) est agencé du coté de l'extérieur du véhicule automobile par rapport au corps creux (12) en tôle.

9. Organe de structure (10) selon l'une quelconque des revendications précédentes, dans lequel l'organe allongé (14) est formé par une partie d'un cadre en matière plastique.

10. Organe de structure (10) selon la revendication 6 ou 7, dans lequel le corps creux (12) en tôle est conformé pour assurer une fonction esthétique à l'extérieur du véhicule automobile.

11. Organe de structure (10) selon l'une quelconque des revendications 1 à 10, destiné à porter un panneau de toit (26) de véhicule automobile destiné à être fixé sur le corps creux (12) en tôle.

12. Organe de structure (10) selon l'une quelconque des revendications 1 à 10, destiné à porter un panneau de toit (26) de véhicule automobile destiné à être fixé sur l'organe allongé (14) en matière plastique.

13. Organe de structure (10) selon l'une quelconque des revendications 1 à 10, comprenant un panneau de toit (26) de véhicule automobile moulé avec l'organe allongé (14) en matière plastique.

14. Organe de structure (10) selon l'une quelconque des revendications précédentes, dans lequel le corps creux (12) en tôle et l'organe allongé (14) en matière plastique sont liés ensemble par collage.

15. Arche de toit de véhicule automobile, **caractérisée en ce qu'**elle comprend un organe de structure (10) de toit selon l'une quelconque des revendications 1 à 14 s'étendant sensiblement longitudinalement par rapport au véhicule et conférant à l'arche de toit sa rigidité.

16. Cadre de toit de véhicule automobile, du type comportant deux cotés longitudinaux reliés entre eux par deux cotés transversaux, **caractérisé en ce qu'**au moins un des cotés est formé par un organe de structure de toit (10) selon l'une quelconque des revendications 1 à 14.

17. Cadre de toit selon la revendication 16, dans lequel chaque coté est formé par un organe de structure de toit (10) selon l'une quelconque des revendications 1 à 14.

18. Cadre de toit selon la revendication 17, dans lequel les organes allongés (14) en matière plastique des quatre cotés sont reliés entre eux de manière à former un cadre en matière plastique.

19. Module de toit de véhicule automobile du type comprenant au moins un élément de module (26), **caractérisé en ce qu'**il comporte un organe de structure de toit (10) selon l'une quelconque des revendications 1 à 14, l'organe allongé (14) en matière plastique portant l'élément de module (26).

20. Module de toit selon la revendication 19, dans lequel l'élément de module (26) est un panneau de toit.

## Claims

1. A motor vehicle roof structure member (10), of the type comprising a sheet-metal elongate hollow body (12) contributing to the stiffness of the structure member (10), and a plastics material elongate member (14) cooperating with the hollow body (12) by being bonded thereto in such a manner as to impart rigidity to the roof structure (10), **characterized in that** the elongate member is fitted against the hollow body and is secured to a seat of this hollow body (12) on the inside or the outside of the motor vehicle relative to the sheet metal hollow body.

2. A structure member (10) according to claim 1, wherein the plastics material elongated member (14) is of generally hollow shape.

3. A structure member (10) according to claim 2, wherein the plastic material elongated member (14) presents a U-shaped section.

4. A structure member (10) according to any one of claims 1 to 3, wherein the plastics material elongate member (14) includes energy absorber means (18) designed to absorb energy in the event of the roof structure (10) being deformed in such a manner as to tend to move the roof closer to a motor vehicle cabin.

5. A structure member (10) according to any one of claims 1 to 4, wherein the plastic material elongated member (14) forms a support for various pieces of equipment (22).

6. A structure member (10) according to any one of claims 1 to 5, wherein the plastics material elongated member (14) is shaped to be disposed on the inside of the motor vehicle relative to the sheet-metal hollow body (12).

7. A structure member (10) according to claim 6, wherein the plastics material elongated member (14) is provided with a masking member (18) for providing an attractive appearance to the inside of the motor vehicle.

8. A structure member (10) according to any one of claims 1 to 5, wherein the plastics material elongated member (14) is shaped to be arranged on the outside of the motor vehicle relative to the sheet-metal hollow body (12).

9. A structure member (10) according to any one of claims 1 to 8, wherein the plastic material elongated member (14) is formed by a portion of a plastics material frame.

10. A structure member (10) according to claim 6 or 7, in which the sheet-metal hollow body (12) is shaped to provide an attractive appearance to the outside of the motor vehicle.

11. A structure member (10) according to any one of claims 1 to 10, for carrying a motor vehicle roof panel (26) designed to be secured to the sheet-metal hollow body (12).

12. A structure member (10) according to any one of claims 1 to 10, for carrying a motor vehicle roof panel (26) designed to be secured to the plastics material elongate member (14).

13. A structure member (10) according to any one of claims 1 to 10, comprising a motor vehicle roof panel (26) molded together with the plastics material elongate member (14).

14. A structure member (10) according to any one of claims 1 to 13, in which the sheet-metal hollow body (12) and the plastics material elongate member (14) are bonded together by adhesive.

15. A motor vehicle roof arch, **characterized in that** it comprises a roof structure member (10) according to any one of claims 1 to 14, extending substantially longitudinally relative to the vehicle and imparting rigidity to the roof arch.

16. A motor vehicle roof frame of the type comprising two longitudinal sides interconnected by two transverse sides, **characterized in that** at least one of the sides is formed by a roof structure member (10) according to claim any one of claims 1 to 14.

17. A roof frame according to claim 16, wherein each side is formed by a roof structure member (14) according to any one of claims 1 to 14.

18. A roof frame according to claim 17, wherein the plastics material elongate members (14) of the four sides are interconnected in such a manner as to form a plastics material frame.

19. A motor vehicle roof module of the type comprising at least one module element (26), **characterized in that** it comprises a roof structure member (10) according to any one of claims 1 to 14, the plastics material elongate member (14) carrying the module element (26).

20. A roof module according to claim 19, in which the module element is a roof panel.

## Patentansprüche

1. Strukturelement (10) des Daches eines Kraftfahrzeugs, das einen gestreckten Hohlkörper (12) aus Metallblech aufweist und zur Versteifung des Strukturelements (10) beiträgt, und ein gestrecktes Element (14) aus Kunststoff, das mit dem Hohlkörper (12) in der Weise verbunden ist, dass es dem Strukturelement (10) des Daches Steifigkeit verleiht, **dadurch gekennzeichnet, dass** das gestreckte Element am Hohlkörper aus Blech angebracht ist und an einem Sitz dieses Hohlkörpers (12) innerhalb oder außerhalb des Kraftfahrzeugs in Bezug auf diesen Hohlkörper (12) aus Blech befestigt ist.

2. Strukturelement (10) nach Anspruch 1, bei dem das gestreckte Element (14) aus Kunststoff eine im Allgemeinen hohle Form aufweist.

3. Strukturelement (10) nach Anspruch 2, bei dem das gestreckte Element (14) aus Kunststoff einen U-förmigen Querschnitt aufweist.

4. Strukturelement (10) nach einem der vorhergehenden Ansprüche, bei dem das gestreckte Element (14) Mittel (18) zum Absorbieren von Energie aufweist, die für das Absorbieren von Energie im Falle der Verformung des Strukturelementes (10) des Daches vorgesehen sind, wenn sich dieses dem Dach der Fahrgastzelle des Kraftfahrzeugs nähern sollte.

5. Strukturelement (10) nach einem der vorhergehenden Ansprüche, bei dem das gestreckte Element (14) eine Halterung für diverse Ausrüstungen (22) bildet.

6. Strukturelement (10) nach einem der Ansprüche 1 bis 5, bei dem das gestreckte Element (14) in Bezug auf den Hohlkörper (12) aus Blech innerhalb des Kraftfahrzeugs angebracht ist.

7. Strukturelement (10) nach Anspruch 6, bei dem das gestreckte Element (14) mit einem Verkleidungselement (17) versehen ist, um für das Innere des Kraftfahrzeugs ein ästhetisches Erscheinungsbild sicherzustellen.

8. Strukturelement (10) nach einem der Ansprüche 1 bis 5, bei dem das gestreckte Element (14) in Bezug auf den Hohlkörper (12) aus Blech außerhalb des Kraftfahrzeugs angebracht ist.

9. Strukturelement (10) nach einem der vorhergehenden Ansprüche, bei dem das gestreckte Element (14) durch einen Teil eines Rahmens aus Kunststoff gebildet wird.

10. Strukturelement (10) nach einem der Ansprüche 6 oder 7, bei dem der Hohlkörper (12) aus Blech so gestaltet ist, dass er für das Äußere des Kraftfahrzeugs ein ästhetisches Erscheinungsbild sicherstellt.

11. Strukturelement (10) nach einem der Ansprüche 1 bis 10, das dafür vorgesehen ist, eine Dachplatte (26) des Kraftfahrzeugs zu tragen, die ihrerseits zur Befestigung an dem Hohlkörper (12) aus Blech bestimmt ist.

12. Strukturelement (10) nach einem der Ansprüche 1 bis 10, das dafür vorgesehen ist, eine Dachplatte (26) des Kraftfahrzeugs zu tragen, die ihrerseits zur Befestigung an dem gestreckten Element (14) aus Kunststoff bestimmt ist.

13. Strukturelement (10) nach einem der Ansprüche 1 bis 10, das eine Dachplatte (26) eines Kraftfahrzeugs umfasst, die mit dem gestreckten Element (14) aus Kunststoff geformt wurde.

14. Strukturelement (10) nach einem der vorhergehenden Ansprüche, bei dem der Hohlkörper (12) aus Blech und das gestreckte Element (14) aus Kunststoff durch Kleben miteinander verbunden sind.

15. Dachbogen eines Kraftfahrzeugs, **dadurch gekennzeichnet, dass** er ein Dachstrukturelement (10) nach einem der Ansprüche 1 bis 14 umfasst und sich in Bezug aus das Fahrzeug im Wesentlichen in Längsrichtung erstreckt und dem Dachbogen seine Steifigkeit verleiht.

16. Dachrahmen eines Kraftfahrzeugs, welcher zwei Längsseiten umfasst, die miteinander durch zwei Querseiten verbunden sind, **dadurch gekennzeichnet, dass** mindestens eine der Seiten durch eine Dachstrukturelement (10) nach einem der Ansprüche 1 bis 14 gebildet wird.

17. Dachrahmen nach Anspruch 16, bei dem jede Seite durch ein Dachstrukturelement (10) nach einem der Ansprüche 1 bis 14 gebildet wird.

18. Dachrahmen nach Anspruch 17, bei dem die gestreckten Elemente (14) aus Kunststoff der vier Seiten untereinander in der Weise verbunden sind, dass sie einen Rahmen aus Kunststoff bilden.

19. Dachmodul eines Kraftfahrzeugs, welches mindestens ein Modulelement (26) umfasst, **dadurch gekennzeichnet, dass** es ein Dachstrukturelement (10) nach einem der Ansprüche 1 bis 14 aufweist, wobei das gestreckte Element (14) aus Kunststoff das Modulelement (26) trägt.

20. Dachmodul nach Anspruch 19, wobei es sich bei dem Modulelement (26) um eine Dachplatte handelt.
